# EUROPEAN PATENT APPLICATION

(11) **EP 4 686 864 A1**
(43) Date of publication of application: **04.02.2026**
(21) Application number: 25193178.8
(22) Date of filing: 31.07.2025
(51) Int. Cl.: F16L 9/18, F16L 23/20, F16L 39/00, F16L 59/065, F16L 59/14, F16L 59/18

(54) **VACUUM-INSULATED PIPE ASSEMBLY**

(30) Priority: 31.07.2024 GB 202411300
(71) Applicant: Airbus Operations Limited, Bristol BS34 7PA (GB); Airbus Operations GmbH, 21129 Hamburg (DE)
(72) Inventor: DA SILVA MORENO, Matheus, Bristol, BS34 7PA (GB); DRAT, Christian, 21129 Hamburg (DE)
(74) Representative: EIP

(57) **Abstract**

Provided is a vacuum insulated pipe assembly comprising a first pipe section and a second pipe section. The first pipe section has a first outer wall and a first inner wall within the first outer wall. The first outer and inner walls are concentric along a common central axis, and the first outer wall is spaced from the first inner wall to define a first space. The second pipe section has a second outer wall and a second inner wall within the second outer wall. The second outer and inner walls are concentric along the common central axis, and the second outer wall is spaced from the second inner wall to define a second space. The first inner wall comprises a first inner connector and the second inner wall comprises a second inner connector connected to the first inner connector. The vacuum-insulated pipe assembly has a shoulder on one of the first and second outer walls, and a sleeve portion supported on the shoulder and slidable along the shoulder in an axial direction along the common central axis selectively provide access to a region in which the first and second inner connectors are located. The vacuum-insulated pipe assembly also has a seal element connected to the shoulder, the seal element configured to provide a seal between the shoulder and the sleeve portion.

## Description

### TECHNICAL FIELD

The present invention relates to vacuum-insulated pipe assemblies, hydrogen fuel systems, and aircraft.

### BACKGROUND

Hydrogen fuel systems for aircraft may comprise vacuum-insulated pipes for transporting cryogenic hydrogen fuel between components of the hydrogen fuel system. Vacuum-insulated pipes employ a vacuum in a space between inner and outer pipes to thermally insulate the cryogenic hydrogen fuel flowing through the inner pipe.

### SUMMARY

A first aspect of the present invention provides a vacuum insulated pipe assembly comprising a first pipe section and a second pipe section. The first pipe section comprises a first outer wall and a first inner wall within the first outer wall. The first outer and inner walls are concentric along a common central axis, and the first outer wall is spaced from the first inner wall to define a first space. The second pipe section comprises a second outer wall and a second inner wall within the second outer wall, the second outer and inner walls are concentric along the common central axis, and the second outer wall is spaced from the second inner wall to define a second space. The first inner wall comprises a first inner connector and the second inner wall comprises a second inner connector connected to the first inner connector. The vacuum-insulated pipe assembly comprises: a shoulder on one of the first and second outer walls; a sleeve portion supported on the shoulder and slidable along the shoulder in an axial direction along the common central axis selectively provide access to a region in which the first and second inner connectors are located; and a seal element connected to the shoulder, the seal element configured to provide a seal between the shoulder and the sleeve portion.

The sleeve provides a convenient way to access the first and second inner connectors, such as to connect or disconnect the first and second inner connectors, for example during manufacture and/or maintenance of the vacuum insulated pipe assembly.

Providing the seal element connected to the shoulder inhibits a flow of fluid, such as a liquid and/or gas, between the shoulder and the sleeve, such as in the event of a leak of fluid between the first and second inner connectors into the region. This may be particularly advantageous when the first and second inner walls are configured to carry a cryogenic fluid, such as cryogenic liquid and/or gaseous hydrogen, and the atmosphere comprises oxygen.

Providing the seal element connected to the shoulder may provide a sleeve that is simpler to manufacture than a sleeve configured to carry the seal element.

Optionally, the shoulder protrudes from the first or second outer wall and extends fully around the common central axis. Optionally, the sleeve is substantially cylindrical and the shoulder forms a circular flange extending around the outer wall. Optionally, the sleeve and shoulder are engaged to restrict a relative motion of the sleeve and the shoulder in an orthogonal direction orthogonal to the common central axis. Optionally, the seal element is connected to the shoulder to restrict a relative movement of the seal element and the shoulder during movement of the sleeve over the shoulder. Optionally, the shoulder comprises a groove, and the seal element is located in the groove. The groove may extend fully around the common central axis.

The first and second walls may be connected by the first and second inner connectors to define a flow path for fluid through the vacuum insulated pipe assembly. Optionally, the vacuum insulated pipe assembly is configured to carry cryogenic fluid, such as cryogenic liquid hydrogen, along the flow path.

Optionally, the shoulder is located on the first outer wall, the sleeve comprises a sleeve connector, and the second outer wall comprises a wall connector. Optionally, the sleeve is slidable along the shoulder to move the sleeve selectively between: a closed position, in which the sleeve connector is engaged with the wall connector so that the region is enclosed by the first and second pipe sections; and an open position, in which the sleeve connector is distanced from the wall connector, so that the region is exposed to an external atmosphere external to the first and second pipe sections.

Providing the sleeve connector allows the sleeve to be readily connected to the wall connector, such as to restrict a movement of the sleeve in the axial direction when the sleeve is in the closed position. This may ensure that the region remains enclosed by the first and second first and second pipe sections, which may reduce a likelihood of damage to the first and second inner connectors.

Optionally, the shoulder comprises a slide face in sliding engagement with the sleeve, and the seal element is located on the slide face. In this way, the sleeve may slide relative to the seal as it is moved to selectively permit access to the region, such as between the open and closed positions. By providing the seal element on the slide face, a relative shape of the sleeve and the shoulder may be provided such that the sleeve exerts a compressive force on the seal when the sleeve is in the closed position. This may avoid the need for a further component for ensuring engagement between the seal and the sliding interface, such as when the sleeve is in the closed position. This may reduce a weight, complexity and/or cost of the vacuum insulated pipe assembly compared to an assembly comprising a seal element that is not located at a sliding interface between the sleeve and the shoulder.

Optionally, the shoulder comprises a limit face in selective engagement with the sleeve to restrict a relative motion of the sleeve in the axial direction. Optionally, the limit face is disengaged from the sleeve when the sleeve is moved to provide access to the region. Optionally, the seal element is located on the limit face.

Providing the seal element on the limit face may cause the sleeve to move away from the seal element in the axial direction when the sleeve is moved to provide access to the region, such as from the closed position to the open position. This may reduce a friction between the sleeve and the seal element compared to an arrangement where the seal element is located on a sliding interface between the sleeve and the shoulder, which may reduce a wear of the seal element and/or may allow the sleeve to be moved more easily.

Optionally, the vacuum insulated pipe assembly comprises two or more seal elements. This may improve a sealing effect between the sleeve and the shoulder, and/or may provide redundancy in the event of a leak through one of the seal elements. Optionally, each seal element is located on the slide face of the shoulder. Alternatively, each seal element may each be located on the limit face of the shoulder. Optionally, one or more first seal elements are provided on the slide face of the shoulder and one or more second seal elements are located on the limit face of the shoulder.

Optionally, the vacuum-insulated pipe assembly comprises a shoulder connector releasably connecting the sleeve to the shoulder to restrict a relative movement of the sleeve and the shoulder. This may reduce a likelihood of the sleeve inadvertently moving away from the shoulder, for example when the sleeve is in the first position. Optionally, the shoulder connector is releasable to permit movement of the shoulder relative to the sleeve to selectively provide access to the first and second inner connectors.

Optionally, the shoulder connector is configured to urge the sleeve towards the shoulder to clamp the seal element between the seal and the shoulder. This may improve a sealing effect provided by the seal element. Optionally, when the sealing element is provided on the slide face of the shoulder, the shoulder connector is configured to urge the sleeve towards the slide face. Optionally, when the sealing element is provided on the limit face of the shoulder, the shoulder connector is configured to urge the sleeve towards the limit face.

Optionally, the shoulder connector comprises one or more bolts extending through corresponding apertures in the sleeve, the one or more bolts engaged with corresponding holes in the shoulder. The one or more apertures and/or holes may be located at a side of the seal element away from the region when the sleeve is in the closed position. This may reduce a likelihood of a flow of fluid to or from the region via the apertures and/or holes when the sleeve is in the closed position.

Optionally, the first and second pipe sections are configured so that the first and second spaces are fluidically connected across the region to provide a continuous space extending across the first and second pipe sections; and wherein the continuous space is evacuated to provide a vacuum in the space. The vacuum may limit a rate of heat transfer, via the space, between a fluid flowing through the first and second inner walls and an external atmosphere external to the first and second pipe sections. In particular, because the region forms a part of the continuous space, the region comprising the first and second inner connectors is also evacuated by evacuating the continuous space. This may reduce a rate of heat transfer, through the region, from the inner and outer connectors to the external atmosphere, compared to an arrangement where the region is not evacuated.

It will be appreciated that the space is evacuated to provide the vacuum when the sleeve is in the closed position, so that the sleeve connector is connected to the wall connector and encloses the region.

Optionally, the first and second pipe sections are configured so that the first and second spaces are fluidically isolated from each other, and wherein the first and second spaces are evacuated to provide a vacuum in each of the first and second spaces. Providing separate first and second spaces may allow the first and second spaces to be evacuated prior to connecting the first and second pipe sections together. In this way, the first and second spaces may be provided as separate sub-assemblies that are connected together to form the vacuum insulated pipe assembly. Evacuating the spaces may take hours, or days, and so evacuating the spaces prior to assembly, as opposed to after assembly, may reduce a time taken to assembly the vacuum insulated pipe assembly.

Providing separate spaces may also allow the vacuum to be maintained when the sleeve is moved to provide access to the region, such as when the sleeve is moved to the second position. This may avoid a need to re-evacuate the region and/or a continuous space when the sleeve is returned to the closed position.

Optionally, the vacuum-insulated pipe assembly comprises rigid thermally insulative material in the region, the rigid thermally insulating material shaped to conform to and at least partly enclose the first and second inner connectors in the region.

By at least partly enclosing the first and second inner connectors, and optionally also the first and second inner walls (or portions thereof), the rigid thermally insulative material may reduce a rate of heat transfer, via the region, between fluid flowing through the first and second connectors and the external atmosphere, in a similar way to the vacuum discussed above. Providing the rigid thermally insulative material in the region may be quicker than evacuating the region to provide a vacuum in the region, thereby improving a speed of manufacture of the vacuum insulated pipe assembly.

Optionally, the vacuum insulated pipe assembly comprises two or more structures of the rigid thermally insulating material. Optionally, each structure of rigid thermally insulating material is shaped to conform to the first and/or second inner connector and optionally also the first and second inner walls, or portions thereof.

Providing two or more structures of the rigid thermally insulating material may allow the structures to be easily provided in and/or removed from the region, such as to provide access to the first and second inner connectors. For instance, first and second structures of the rigid thermally insulating material may be provided at either side of a plane comprising the common central axis. This may allow the first and second structures of the rigid thermally insulating material to be sequentially inserted into the region to enclose the first and second inner connectors. This may also allow the first and second structures of the rigid thermally insulative material to be removed from the region without damaging the first and second structures. This may allow the first and second structures to be re-used, reducing a cost and/or time associated with providing a new structure or structures of the rigid thermally insulative material.

The rigid thermally insulative material may comprise a material that has a thermal conductivity lower than that of air. An example such material is Polyetherimide, (branded as ULTEM^{®}). The rigid thermally insulative material may be shaped so as to enclose at least a part of the first and/or second outer wall. The rigid thermally insulative material may be shaped to as to fill the region. The vacuum-insulated pipe assembly may comprise sheet insulation in the region, such as a multi-layer insulation (MLI). Such sheet insulation may surround the first and/or second inner pipes, and the rigid thermally insulative material may be provided on the sheet insulation. Alternatively, or in addition, the sheet insulation may surround the rigid thermally insulative material.

Optionally, the shoulder is located on the first outer wall, the sleeve comprises a first flange, and the second outer wall comprises a second flange. Optionally, the first and second flanges are releasably connected so that the first and second outer walls and the sleeve enclose the region. Optionally, the vacuum insulated pipe assembly comprises a connector seal element between the first and second flanges.

The connector seal element between the first and second flanges may fluidically isolate the region from the external atmosphere external to the first and second pipe sections. This may prevent a flow of fluid in the region, such as a fluid that has leaked from the first and/or second inner walls, along an interface between the first and second flanges and into the external atmosphere. This may also prevent a passage of fluid from the external atmosphere, such as air, into the region along the interface between the first and second flanges. This may assist in maintaining a vacuum in the region, when provided.

Optionally, the connector seal element comprises a metallic gasket. Optionally, at least one of the first and second flanges comprises a protrusion. Optionally, the protrusion is engaged with the metallic gasket such that the metallic gasket is plastically deformed in the region of the protrusion. During connection of the first and second flanges to each other, the metallic gasket is clamped between the first and second flanges. A force provided by the clamping effect causes the protrusion to engage the metallic gasket and cause plastic deformation of the metallic gasket in the region of the protrusion.

The plastically-deformed metallic gasket fills in machining marks and surface defects in the first and second flanges, providing a hermetic seal. Furthermore, the metallic gasket is work-hardened by the plastic deformation. This provides a strong and resilient metallic gasket that is resilient to movement of the first and/or second flanges, such as due to expansion or contraction of the first and/or second flanges in the event of a change in temperature of the first and/or second flanges. This may, in turn, provide a seal that is more resilient to changes in temperature than, for example, an elastomeric seal elastically deformed between the first and second flanges, which may experience greater expansion and/or contraction on exposure to changing temperatures than the metallic gasket, such as in the event of a leak of cryogenic fluid from the first and/or second inner walls. Thus, the plastically deformed outer metallic gasket may be more resilient and/or more reliable than an elastomeric seal, particularly when the first and/or second inner walls are configured to carry cryogenic fluid, such as cryogenic hydrogen fuel.

Optionally, the first and second flanges comprise co-axial bolt holes, and the vacuum-insulated pipe assembly comprises bolts that extend through the co-axial bolt holes to connect the first and second flanges to each other. The bolts urge the first and second outer flanges towards each other, and thereby compress the metallic gasket between the first and second outer flanges to maintain the hermetic seal.

A second aspect of the present invention provides a hydrogen fuel system comprising the vacuum-insulated pipe assembly of the first aspect of the present invention, the first and second inner walls forming a flow path for flow of hydrogen fuel in the hydrogen fuel system.

Optionally, the hydrogen fuel system comprises a hydrogen fuel tank and a fuel line connected between the fuel tank and an engine, the fuel line comprising the vacuum-insulated pipe assembly. Optionally, the hydrogen fuel system is an aircraft hydrogen fuel system, and the engine is an aircraft engine. Optionally, the engine comprises a combustion engine and/or a fuel cell.

It will be appreciated that the hydrogen fuel system may comprise and/or benefit from any of the optional features and/or advantages provided for the vacuum-insulated pipe assembly of the first aspect of the present invention.

A third aspect of the present invention provides an aircraft fuel system comprising the vacuum insulated pipe assembly of the first aspect of the present invention, or the hydrogen fuel system of the second aspect of the present invention.

### BRIEF DESCRIPTION OF THE DRAWINGS

Embodiments of the invention will now be described, by way of example only, with reference to the accompanying drawings, in which:
Figure 1 shows a schematic view of an example aircraft;
Figure 2 shows a schematic view of an example hydrogen fuel system;
Figure 3A shows a schematic view of an example vacuum-insulated pipe assembly;
Figure 3B shows a schematic zoomed-in view of a part of a part of the vacuum-insulated pipe assembly with a sleeve thereof in a closed position;
Figures 4A and 4B show schematic cutaway views of first and second rigid insulation parts in the vacuum-insulated pipe assembly;
Figure 5 shows an end-on schematic view of the first rigid insulation part;
Figure 6 shows a schematic view of the vacuum-insulated pipe assembly with the sleeve in the open position;
Figure 7A shows a schematic view of a first alternative vacuum-insulated pipe assembly;
Figure 7B shows a schematic zoomed-in view of a part of the first alternative vacuum-insulated pipe assembly;
Figure 8 shows a schematic view of a second alternative vacuum-insulated pipe assembly;
Figure 9A shows a schematic view of a third alternative vacuum-insulated pipe assembly; and
Figure 9B shows a zoomed-in schematic view of a part of the third alternative vacuum-insulated pipe assembly.

### DETAILED DESCRIPTION

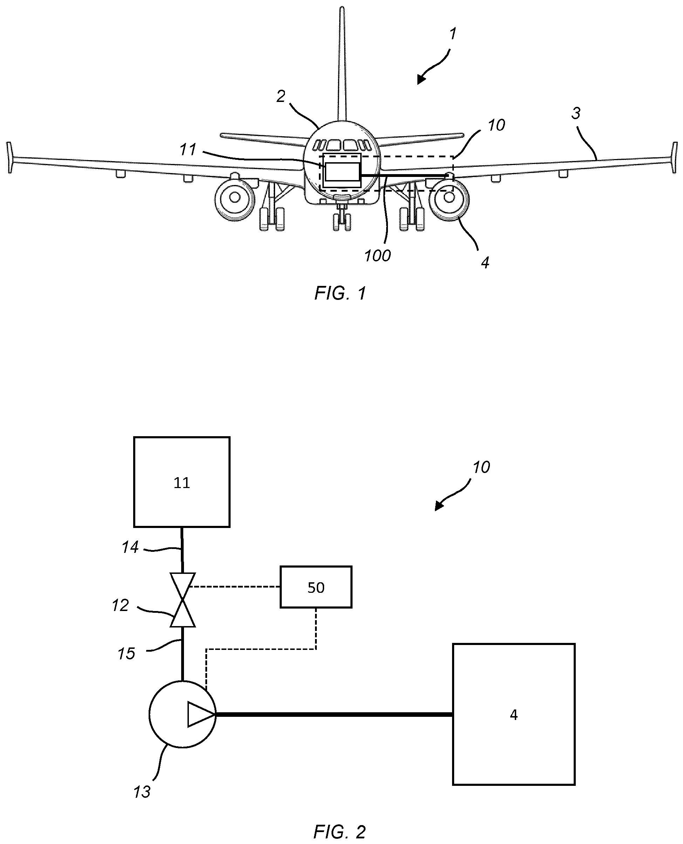

Figure 1 shows an example aircraft 1 comprising a fuselage 2, a wing 3 and an engine 4 mounted on the wing 3. The aircraft 1 comprises a hydrogen fuel system 10 comprising a hydrogen fuel tank 11 storing cryogenic hydrogen fuel. The hydrogen fuel system 10 comprises a vacuum-insulated pipe assembly 100 fluidically connected between the hydrogen fuel tank 11 and the engine 4 (here shown as a single line, for ease of comprehension). The vacuum-insulated pipe assembly 100 is configured to provide hydrogen fuel to the engine 4. The hydrogen fuel tank 11 is located in the fuselage 2, and the vacuum-insulated pipe assembly 100 extends from the fuselage 2 along the wing 3 of the aircraft 1. The engine 4 comprises a combustion engine, but in other examples, the engine 4 may comprise a hydrogen fuel cell, which may generate electricity for powering a propulsor of the aircraft 1. It will be appreciated that whilst the below discussion relates to a vacuum-insulated pipe assembly 100 that is fluidically connected between a hydrogen fuel tank and an engine of an aircraft, in other examples the vacuum-insulated pipe assembly 100 may be employed in any other suitable system, such as in a refuel line of a refuel system for refuelling the hydrogen fuel tank. In other examples, the vacuum-insulated pipe assembly may be employed in a cryogenic fluid distribution system that is not installed on an aircraft, and/or that carries a fluid other than hydrogen.

The hydrogen fuel system 10 is shown in more detail in Figure 2. The hydrogen fuel system 10 comprises the hydrogen fuel tank 11 storing the cryogenic hydrogen fuel for the engine 4. The hydrogen fuel system 10 also comprises a valve 12, a pump 13, a first vacuum-insulated pipe 14 fluidically connecting the valve 12 to the hydrogen fuel tank 11, and a second vacuum-insulated pipe 15 fluidically connecting the pump 13 to the valve 14. The first and second vacuum-insulated pipes 14, 15 are shown as single lines for ease of comprehension. The hydrogen fuel system 100 comprises the vacuum-insulated pipe assembly 100 fluidically connecting the pump 13 to the engine 4.

The hydrogen fuel system 10 also comprises a controller 50 configured to operate the pump 13 and the valve 12 to selectively cause hydrogen fuel to flow from the hydrogen fuel tank 11 to the engine 4 via the vacuum-insulated pipe assembly 100. It will be appreciated that the arrangement shown in Figure 2 is exemplary only, and that in other examples the hydrogen fuel system 10 may comprise any other suitable arrangement of pumps, valves, vacuum-insulated pipe assemblies and/or other components for distributing fuel in the hydrogen fuel system 10.

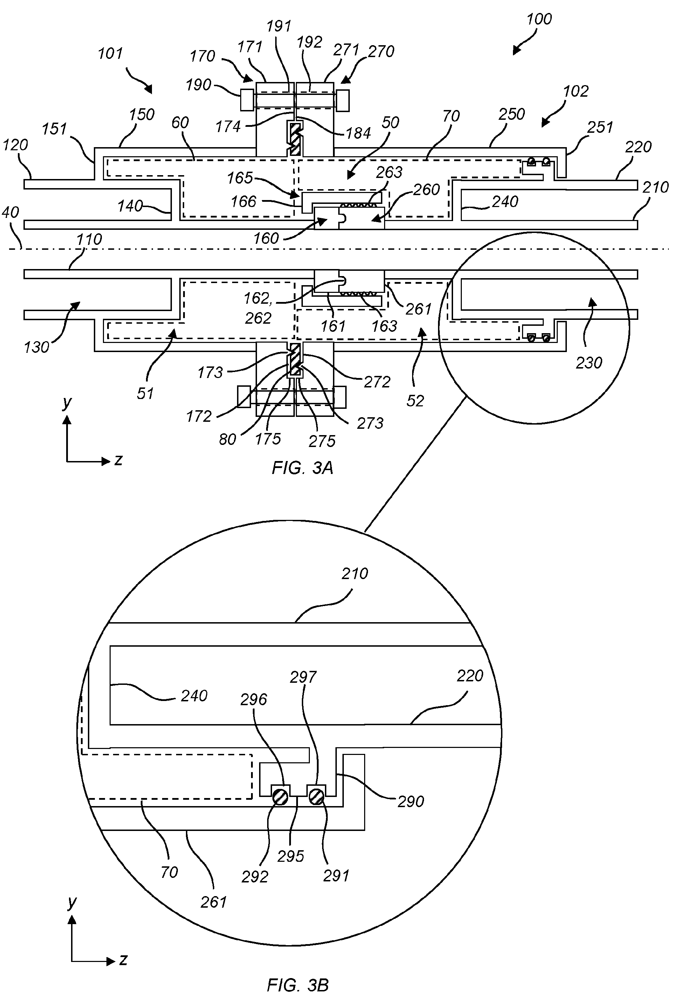

Figures 3A and 3B show the vacuum-insulated pipe assembly 100 in more detail. The vacuum-insulated pipe assembly 100 has a first pipe section 101, a second pipe section 102, a metallic gasket 80, a first region 51 defined by the first pipe section 101, a second region 52 defined by the second pipe section 102, and first and second rigid insulation parts 60, 70 in the respective first and second regions 51, 52. The first and second regions 51, 52 together form an inner region 50 bounded by the first and second pipe sections 101, 102. The first pipe section 101 has a first inner tubular wall 110, a first outer tubular wall 120, a first space 130, a first annular wall 140, a first inner connector 160, an outer collar 150, an outer collar wall 151, and a first outer connector 170. The second pipe section 102 has a second inner pipe 210, a second outer pipe 220, a second annular wall 240, a second inner connector 260, a shoulder 290, a sleeve 250, first and second elastomeric O-rings 291, 292, and a second outer connector 270.

The first inner and outer tubular walls 110, 120 are concentric along a common central axis 40. The first space 130 is defined between the first inner and outer tubular walls 110, 120, which are radially distanced from each other. The first annular wall 140 is a solid wall connecting the first inner tubular wall 110 to a free end of the first outer tubular wall 120. The first annular wall 140 defines a closed end of the first space 130. The first space 130 is evacuated to provide a vacuum in the first space 130. A free end of the first inner tubular wall 110 extends away from the first annular wall 140 in a first axial direction along the common central axis 40.

The first inner flange 161 has first and second side faces, facing in the respective first and second (opposite) axial directions along the common central axis 40, and an outer surface facing radially away from the common central axis 40. The first inner connector 160 comprises a tongue 162, which is a protrusion that protrudes from the first side surface of the first inner flange 160 in the first axial direction along the common central axis 40. The connection collar 165 is a tubular component that is concentric with the common central axis 40. An inner surface of the connection collar 165 is in sliding communication with the outer surface of the first inner flange 161. The connection collar 165 comprises a lip 166 at an end of the connection collar 165 closest to the first annular wall 140 along the common central axis 40. The lip 166 depends radially inwardly towards the first inner tubular wall 110 and abuts the second side face of the first inner flange 161. The connection collar 165 also has a threaded portion that overhangs the first inner flange 161 in the first axial direction and has an internal thread.

The outer collar 150 is tubular and surrounds the first inner and outer tubular walls 110, 120. The outer collar 150 is radially spaced from the first outer tubular wall 120 and connected to the first outer tubular wall by 120 the outer collar wall 151. The outer collar wall 151 is a solid annular wall that extends radially between the first outer tubular wall 120 and the outer collar 150. The outer collar wall 151 is axially offset along the common central axis 40 relative to the first annular wall 140. The axial offset between the outer collar wall 151 and the first annular wall 140 is such that conductive heat transfer between the second outer tubular wall and the second inner tubular wall 210 is below a pre-defined acceptable level. Specifically, the axial offset in the illustrated example is greater than an internal diameter of the first inner tubular wall 110. The outer collar 150, the outer collar wall 151, the first outer tubular wall 120, the first annular wall 140, and the first inner wall 110 together define a closed end of the first region 51.

The first outer connector 170 has a first outer flange 171 that is an annular member extending around a free end of the outer collar 150. The first outer flange 171 has a first outer seal surface 172 that is flat and orthogonal to the common central axis 40. The first outer flange 170 has a first outer connection surface 174 that is similarly flat and orthogonal to the common central axis 40. The first outer connection surface 174 is stepped away from the first outer seal surface 172 in the first axial direction to provide a first outer ridge 175. The first outer ridge 175 has a flat surface between the first outer seal surface 172 and the first outer connection surface 174, the flat surface facing towards the common central axis 40. The first outer flange 171 has a first knife-edge protrusion 173 on the first outer seal surface 172, the first knife-edge protrusion 173 encircling the common central axis 40. The first outer flange 171 comprises first bolt holes 191 equally spaced apart in a circular array around the common central axis 40. The first bolt holes 191 extend through the first outer flange 271 in a direction along the common central axis 40.

The second inner and outer tubular walls 210, 220 are concentric along the common central axis 40. The second space 230 is defined between the second inner and outer tubular walls 110, 120, which are radially distanced from each other. The second annular wall 240 is a solid wall connecting the second inner pipe 210 to a free end of the second outer pipe 220. The second annular wall 240 defines a closed end of the second space 230. The second space 230 is evacuated to provide a vacuum in the second space 230. A free end of the second inner pipe 210 extends away from the second annular wall 240 in a second axial direction, opposite to the first axial direction, along the common central axis 40.

The second inner connector 260 comprises a second inner flange 261, which is an annular member extending radially away from the second inner pipe 210. The second inner flange 261 has a connection surface facing in the second axial direction, and an outer surface facing radially away from the common central axis 40. The second inner connector 260 has a connector groove 262, which is a recess in the connection surface of the second inner flange 261, and an external thread 263 on the outer surface of the second inner flange 261.

As best shown in Figure 3B, the shoulder 290 is an annular member that protrudes from, and extends peripherally around, the second outer pipe 220. The shoulder 290 is axially offset from the second annular wall 240 in the second axial direction by an amount such that conductive heat transfer between the second outer tubular wall and the second inner tubular wall 210 is below a pre-defined acceptable level. Specifically, the axial offset in the illustrated example is greater than an internal diameter of the second inner tubular wall 210. The shoulder 290 defines a supporting surface 295 facing radially outwardly, away from the common central axis 40. The supporting surface 295 defines first and second grooves 296, 297, which are recesses in the supporting surface 295. The first and second elastomeric O-ring seals 291, 292 are rubber O-rings (specifically Polytetrafluoroethylene (PTFE) O-rings) that are resilient under cryogenic conditions. The first and second elastomeric O-ring seals 291, 292 are located in the respective first and second grooves 296, 297. The sleeve 250 is a tubular wall that is concentric with the common central axis 40 and extends around the shoulder 290 in contact with the supporting surface 295. A free end of the sleeve 250 extends in the second axial direction. An end of the sleeve 250 opposite to the free end of the sleeve 250 has a sleeve lip 251 extending radially inwardly towards the second outer tubular wall 220.

The second outer connector 270 has a second outer flange 271, which is an annular member extending radially outwardly from the free end of the sleeve 250. The second outer flange 271 has a second outer seal surface 272 that is flat and orthogonal to the common central axis 40. The second outer flange 270 has a second outer connection surface 274 that is similarly flat and orthogonal to the common central axis 40. The second outer connection surface 274 is stepped away from the second outer seal surface 272 in the second axial direction to provide a second outer ridge 275. The second outer ridge 275 has a flat surface between the second outer seal surface 272 and the second outer connection surface 274. The flat surface of the second outer ridge 275 faces towards the common central axis 40. The second outer flange 271 has a second knife-edge protrusion 273 on the second outer seal surface 272. The second knife-edge protrusion 273 encircles the common central axis 40. The second outer flange 271 comprises second bolt holes 192 equally spaced apart in a circular array around the common central axis 40. The second bolt holes 192 extend through the second outer flange 271 in a direction along the common central axis 40 .

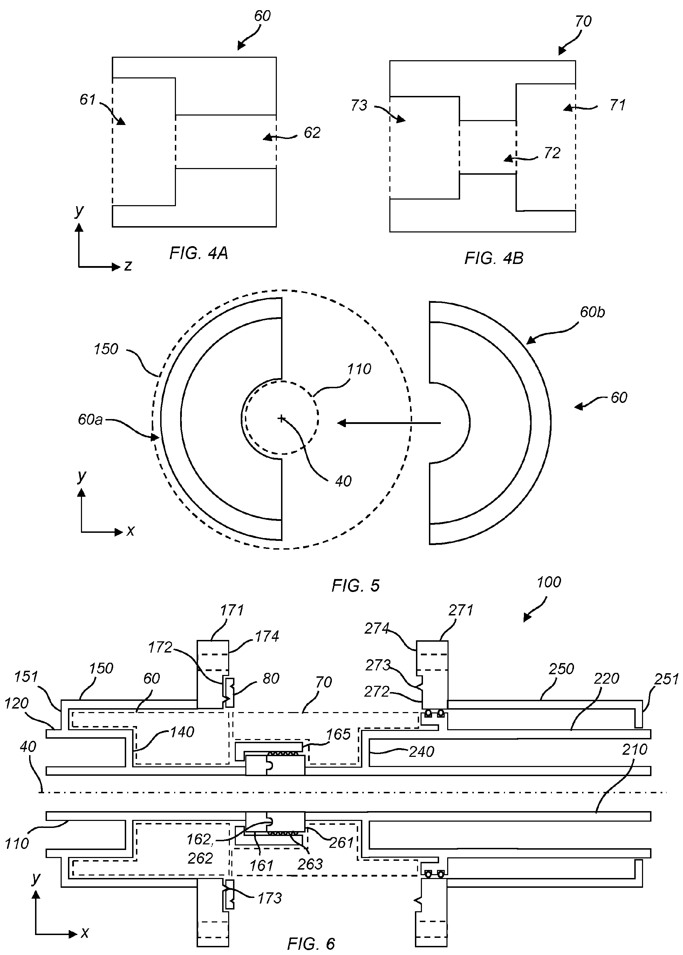

Figures 4A and 4B show the first and second rigid insulation parts 60, 70 in isolation. The first and second rigid insulation parts 60, 70 are formed of polyetherimide (branded as ULTEM^{®}), and substantially fill the respective first and second regions 51, 52 (and together substantially fill the inner region 50). The first and second rigid insulation parts 60, 70 are shaped to conform to a shape of the respective first and second regions 51, 52. Specifically, the first rigid insulation part 60 has a substantially cylindrical outer surface. The first rigid insulation part 60 extends radially from the first inner tubular wall 110 to the outer collar 150, and extends axially from the outer collar wall 151 to a plane aligned with the first outer connection surface 174 of the first outer flange 171. The second rigid insulation part 70 similarly comprises a substantially cylindrical outer surface. The second rigid insulation part extends radially from the second inner tubular wall 210 to the sleeve 250, and extends axially from the shoulder 290 to a plane aligned with the second outer connection surface 184 of the second outer flange 271.

The first rigid insulation part 60 comprises a first outer wall cavity 61 shaped to conform to the first outer tubular wall 120, and a first inner wall cavity 62 shaped to conform to the part of the first inner tubular wall 120 that protrudes from the first annular wall 140 in the first axial direction. The second insulation part 70 comprises a second outer wall cavity 71 shaped to conform to the second outer tubular wall, a second inner wall cavity 72, shaped to conform to the portion of the second inner tubular wall 210 protruding from the second annular wall 240, and an inner connector cavity 73 shaped to conform to the first and second inner connectors 160, 260.

Figure 5 shows the first rigid insulation part 60 when viewed along the common central axis 40 in the first axial direction. The first rigid insulation part 60 is formed by first rigid insulation half-parts 60a, 60b, which are located on either side of the common central axis 40. The first rigid insulation part 60 is provided in the first region 51 by locating one of the first rigid insulation half-parts 60a in the first region 51 on one side of the common central axis 40, and then locating the other of the first rigid insulation half-parts 60b in the first region 51 on an opposite side of the common central axis 40. Whilst not shown in the Figures, the second rigid insulation part 70 is similarly formed by second rigid insulation half-parts.

Connections between various components of the first and second pipe sections 101, 102 will now be described in detail. The first side face of the inner flange 161 is engaged with the connection surface of the second inner flange 261. The tongue 162 is seated in the connector groove 262. The connection collar 165 extends over the first and second inner flanges 171, 271, and the internal thread 163 of the connection collar 165 is releasably screwed onto the external thread 263 of the second inner flange 261. The tongue 162 extends into and contacts the connector groove 262 and forms a seal between the first and second inner flanges 171, 271 The lip 166 contacts the second side face of the first inner flange 161 to restrict a relative movement of the first inner flange 161 away from the second inner flange 261 in the second axial direction. The first and second inner connectors 160, 260 thereby connect the free ends of the first and second inner tubular walls 110, 210 to each other. The first and second inner tubular walls 110, 210 and the first and second inner connectors 160, 260 together define a flow path through which hydrogen fuel is flowable in the vacuum insulated pipe assembly 100.

The sleeve 250 is shown in Figures 3A and 3B in a "closed position", where the second outer flange 271 is releasably engaged with the first outer flange 272 by bolts 190 passing through the first bolt holes 191 of the first outer flange 171 and the second bolt holes 192 of the second outer flange 271. The metallic gasket 80 is an annular copper disc located between the first and second seal surfaces 172, 272. The bolts 190 are tightened and the first and second outer seal surfaces 172, 272 exert a clamping force on the metallic gasket 190. This causes the first and second knife-edge protrusions 173, 273 to penetrate and plastically deform the metallic gasket 80 in the region of the first and second knife-edge protrusions 173, 273. The plastically-deformed metallic gasket 80 forms a hermetic seal between the first and second outer flanges 171, 271.

In the closed position shown in Figures 3A and 3B, the second outer connector 270, the sleeve 250, the shoulder 290, the second outer tubular wall 220, the second annular wall 240, the second inner wall 210 and the first and second inner connectors 160, 260 enclose the second region 52. The first and second elastomeric O-ring seals 291, 292 provide a seal between the sleeve 250 and the slide surface 295 of the shoulder 290. This reduces a likelihood of hydrogen fuel in the inner region 50, such as due to a leak from the first and/or second inner pipes 110, 210, passing into an external atmosphere external to the first and second pipe sections 101, 102 between the sleeve 250 and the shoulder 290. The metallic gasket 80 similarly provides a seal between the first and second outer flanges 171, 271, and so reduces a likelihood of hydrogen fuel in the inner region 50 passing into the external atmosphere. The metallic gasket 80 and the first and second elastomeric O-ring seals 291, 292 thereby fluidically isolate the inner region 50 from the external atmosphere when the sleeve 250 is in the closed position.

The first and second flanges 171, 172 can be uncoupled by removing the bolts 190, and the sleeve 250 is slidable in the first axial direction along the slide surface 295 of the shoulder 290 to an "open position", shown in Figure 6, where the inner region 50 is exposed to the external atmosphere. This sleeve 250 is thereby moveable to selectively provide access to the inner region 50.

The sliding sleeve 250 allows the first and second inner connectors 160, 260 to be accessed by uncoupling the first and second outer flanges 171, 172, sliding the sleeve 250 from the closed position to the open position, and removing the first and second rigid insulation parts 60, 70. The vacuum-insulated pipe assembly 100 can be subsequently reassembled by re-inserting the first and second rigid insulation parts 60, 70 into the respective first and second regions 51, 52, sliding the sleeve 250 from the open position to the closed position, and connecting the first and second flanges 171, 271 to each other with the bolts 190. When re-assembling, a replacement metallic gasket 80 may be required to ensure that the metallic gasket 80 can be plastically deformed by the first and second knife-edge protrusions 173, 273.

Providing the rigid thermal insulation 60, 70 in the inner region 50 reduces a rate of heat transfer between the external atmosphere and the cryogenic hydrogen fuel flowing through the flow path defined by the first and second inner tubular walls 110, 210, in use. The axial offset between the outer collar wall 151 and the first annular wall 140 means that there is a length of the first outer tubular wall 120 extending between the outer collar wall 151 and the first annular wall 140. Thus, any heat from the external environment that is conducted by the outer collar 150, the outer collar wall 151, or the first outer tubular wall 120 must pass along the length of the first outer tubular wall 120 extending between the outer collar wall 151 and the first annular wall 140 before it reaches the first inner tubular wall 110. A greater axial offset between the outer collar wall 151 and the first annular wall 140 provides a longer the portion of the first outer tubular wall 120 extending between the outer collar wall 151 and the first annular wall 140 is, and a lower rate of heat conduction from the external atmosphere to the first inner tubular wall 110. Similar comments apply with regard to the axial offset of the shoulder 190 from the second annular wall 240. A longer portion of the outer tubular wall 220 extending between the shoulder 290 and the second annular wall 240, due to a greater axial offset of the shoulder 190 and the second annular wall 240, leads to reduced head conduction from the external environment to the second inner tubular wall 210.

In some examples, though not shown here, the vacuum-insulated pipe assembly 100 also comprises further thermal insulation, such as rigid thermal insulation, surrounding the first and second outer connectors 170, 270. In some such cases, the rigid thermal insulation comprises polyetherimide (ULTEM) or a cork material. This may further reduce a rate of heat transfer from the external atmosphere into the inner region 50, and subsequently into the cryogenic hydrogen fuel flowing through the flow path, in use. In some examples, the vacuum-insulated pipe assembly 100 comprises sheet insulation, such as multi-layer insulation (MLI) sheets, provided in the region. The MLI may be provided in addition to the first and second rigid insulation parts 60, 70, such as lining the first outer wall cavity 61, the first inner wall cavity, the second outer wall cavity 71, the second inner wall cavity 72, the connector cavity 73, and/or the outer surfaces of the first and/or second rigid insulation parts 60, 70. It will be appreciated that the rigid thermal insulation comprises any other suitable materials in other examples. Moreover, in some examples, the inner region 50, may be absent any thermally-insulative material, and the inner region 50 may be evacuated to provide a vacuum when the sleeve 250 is in the closed position to seal the inner region 50 from the external atmosphere.

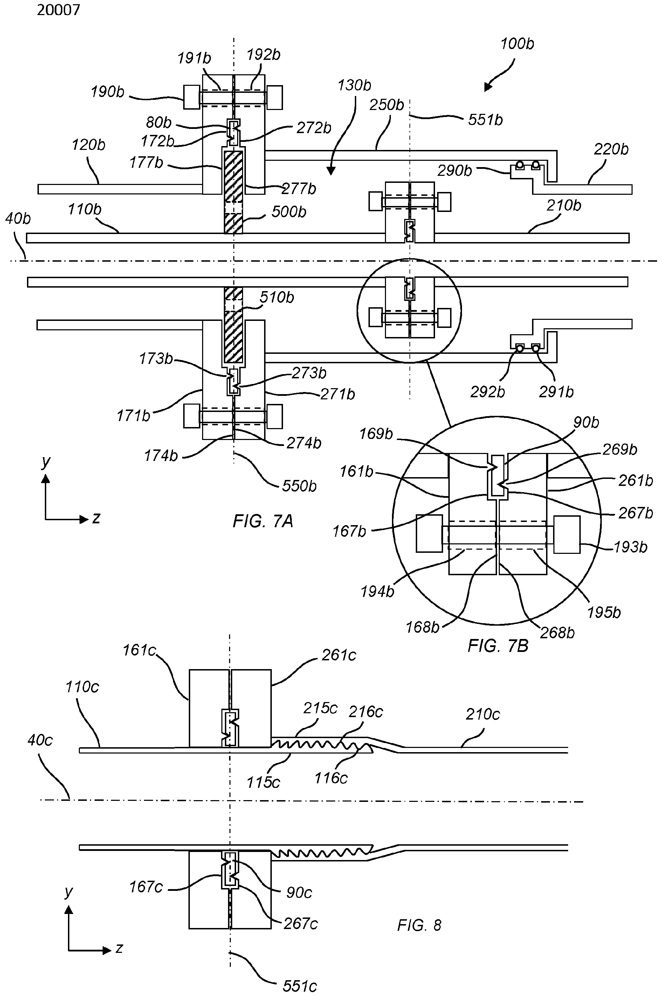

Figure 7 shows a first alternative vacuum-insulated pipe assembly 100b. Components of the first alternative vacuum-insulated pipe assembly 100b corresponding to those of the vacuum-insulated pipe assembly 100 shown in Figures 1 to 6 are given like reference numerals with a suffix "b". The first alternative vacuum-insulated pipe assembly 100b primarily differs from the vacuum-insulated pipe assembly 100 in that, instead of providing separate first and second spaces 130, 230, the first alternative vacuum-insulated pipe assembly 100b of Figure 7 comprises a continuous alternative space 130b defined between, and extending across, the first and second inner and outer tubular walls 110b, 120b, 210b, 220b. Instead of providing the first annular wall 140 and the outer collar 150, the first flange 171b extends around the free end of the first outer tubular wall 120b. The second annular wall 240 is also omitted, and the shoulder 290b protrudes radially from a free end of the second outer tubular wall 220b.

A further difference is that the first alternative vacuum-insulated pipe assembly 100b does not comprise the connection collar 150, and comprises alternative first and second inner flanges 161b, 261b. The alternative first and second inner flanges 161b, 261b do not comprise the tongue 162 or groove 262 provided on the first and second inner flanges 161, 261 of the vacuum-insulated pipe assembly 100. Instead, the first and second alternative inner flanges 161b. 261b comprise first and second inner seal surfaces 167b, 267b which are flat and extend radially away from the common central axis 180b. A first inner knife-edge protrusion 169b is provided on the first inner seal surface 167b, and a second inner knife-edge protrusion 269b is provided on the second inner seal surface 267b. As with the alternative first and second outer flanges 171b, 271b, the alternative first and second inner flanges 161b, 261b comprise respective first and second inner connection surfaces 168b, 268b, which are connected together by inner bolts 193b extending through inner bolt holes 194b, 195b in the alternative first and second inner flanges 161b, 261b. The inner bolts 190b clamp an inner metallic gasket 90b, which is an annular copper disc, between the first and second inner seal surfaces 167b, 267b. The inner metallic gasket 90b is plastically deformed in the region of the first and second inner knife-edge protrusions 169b, 269b. This provides a hermetic seal between the alternative first and second inner flanges 161b, 261b.

A further difference between the vacuum insulated pipe assembly 100 and the first alternative vacuum insulated pipe assembly 100b is that the first alternative vacuum-insulated pipe assembly 100b comprises alternative first and second outer flanges 171b, 271b. The alternative first and second outer flanges 171b, 271b comprise the first and second outer seal surfaces 172b, 272b and the first and second outer connection surfaces 174b, 274b, as in the vacuum insulated pipe assembly 100. The alternative first and second outer flanges 171b, 271b differ from the first and second outer flanges 171, 181 in that the alternative first and second outer flanges 171b, 271b respectively comprise first and second locator grooves 177b, 277b, which are flat surfaces recessed from the respective first and second outer seal surfaces 172b, 272b.

The first alternative vacuum-insulated pipe assembly 100b also comprises a locator 500b, which is a rigid annular disc extending between the first inner tubular wall 110b and the first and second outer flanges 171b, 271b. The locator 500b extends around the first inner tubular wall 110b at a location away from the first inner flange 161b in the second axial direction. The locator 500b has an outer rim that is clamped between the first and second outer flanges locator grooves 177b, 277b. This restricts a relative motion of the locator 500b, and so also the first inner tubular wall 110b, relative to the first outer tubular wall 120b. The locator 500b comprises apertures 510b therethrough, which permit the alternative space 130b to extend across the locator 500b. The first and second outer flanges 171b, 271b are connected at an outer flange interface 550b, and the alternative first and second inner flanges 161b, 261b are connected at an inner flange interface 551b. The inner flange interface 551b is axially offset from the outer flange interface 550b in the first axial direction, and the axial offset is maintained by the locator 500b.

There is also no rigid thermal insulation provided in the first alternative vacuum-insulated pipe assembly 100b. Instead, the alternative space 130b is evacuated to provide a vacuum in the alternative space 130b, the vacuum extending across the alternative first and second inner flanges 161a 261b. The vacuum provides a thermal barrier between the external atmosphere and cryogenic liquid hydrogen flowing in the flow path defined by the first and second inner tubular walls 110b, 210b, in use.

Figure 8 shows a second alternative vacuum-insulated pipe assembly 100c. Here, for visual clarity, only the first and second inner tubular walls 110c, 210c and the first and second inner flanges 161c, 261c are shown. The rest of the second alternative vacuum-insulated pipe assembly 100c is the same as the first further vacuum-insulated pipe assembly 100b. Components of the second alternative vacuum-insulated pipe assembly 100c corresponding to those of the first alternative vacuum-insulated pipe assembly 100b are given like reference numerals, with a suffix "c".

Here, instead of connecting the first and second inner flanges 161c, 261c together using inner bolts, the first and second inner tubular walls 110c, 210c comprise respective threaded portions 115c, 215c, which engage to connect the first inner tubular wall 110c to the second inner tubular wall 210c. The second threaded portion 215c defines a free end of the second inner tubular wall 210c around which the second inner flange 261c extends. The first threaded portion 115c defines a free end of the first inner tubular wall 110c, which extends through each of the first and second inner flanges 161c, 261c. The first threaded portion 115c defines an external thread 116c that is screwed into an internal thread 216c of the second threaded portion 215c. This brings the first and second inner flanges 161c, 261c together to clamp the inner metallic gasket 90c between the first and second inner seal surfaces 167c, 267c. In some examples, though not shown here, the first and second inner flanges 161c, 261c each define a hex head outer surface so that the first and second inner flanges 161c 261c can be tightened together using hex-shaped tools, such as spanners.

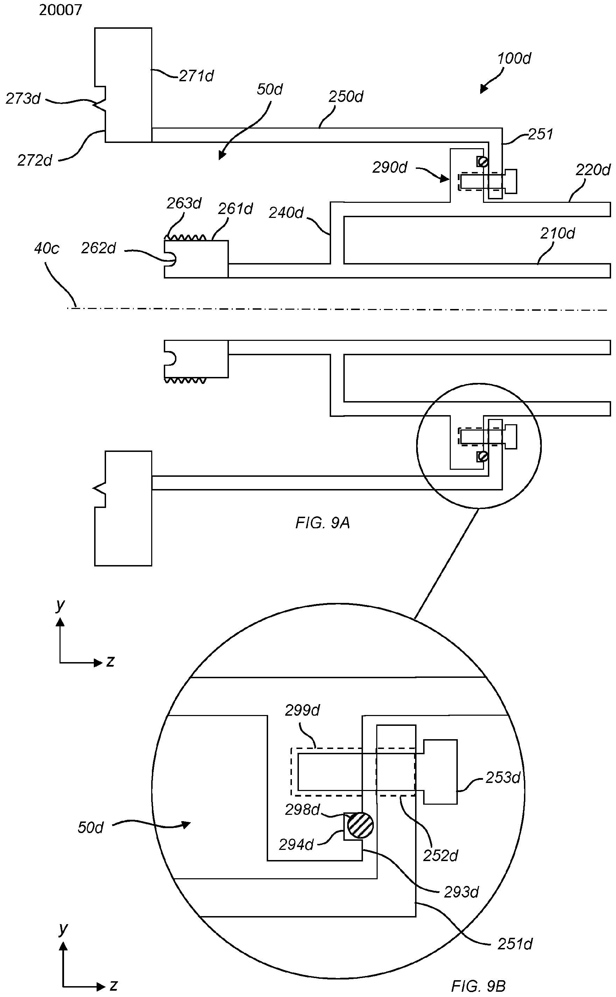

Figures 9A and 9B show a third alternative vacuum-insulated pipe assembly 100d, which is the same as the vacuum-insulated pipe assembly 100 shown in Figures 3A to 6, except with a modified shoulder 290d. Features corresponding to those of Figures 3A and 3B are given like reference numerals, with a suffix "d". In Figure 9, only the second outer tubular wall 220d, the second outer flange 271d, the second inner tubular wall 210d, the second internal connector 261d, and the modified shoulder 290d are shown. The rest of the third alternative vacuum-insulated pipe assembly 100d is the same as the vacuum-insulated pipe assembly 100 shown in Figures 3A to 6.

The modified shoulder 290d, as best shown in Figure 9B, comprises a side surface 293d that faces in the first axial direction. The side surface 293d comprises a side groove 294d and a third elastomeric O-ring seal 298d in the side groove 294d. The third elastomeric O-ring seal 298d is formed of the same material as the first and second elastomeric O-ring seals 291, 292 (PTFE). The modified shoulder 290d also comprises shoulder holes 299d in the side surface 293d, which are spaced apart around the common central axis 40d and comprise internal threads. The sleeve lip 251d comprises correspondingly-located lip apertures 252d.

The sleeve lip 251d of the sleeve 250d engages the side surface 293d when the sleeve 250d is in the closed position. The third elastomeric O-ring seal 298d seals an interface between the side surface 293d and the sleeve lip 251d. The sleeve lip 251d is connected to the side surface 293d using bolts 253d passed through the lip apertures 252d and screwed into the internal threads of the shoulder holes 299d. This provides a clamping force holding the tubular sleeve 250d in place relative to the modified shoulder 290d. The clamping force also improves a sealing effect of the third elastomeric O-ring seal 298d. The third elastomeric O-ring seal 298d is located closer to the inner region 50d than the bolt holes 299d and lip apertures 252d, so that the third elastomeric O-ring seal 298 fluidically isolates the bolt holes 299d and lip apertures 252d from the inner region 50d.

Various modifications to the examples described above may be made without departing from the scope of the invention, as defined in the appended claims. Moreover, examples described above may be combined. For instance, whilst the vacuum-insulated pipe assembly 100 shown and described in relation to Figures 3A and 3B comprises a threaded connection collar 165 for connecting the first and second inner flanges 161, 261 together, in other examples the first and second inner flanges may be bolted together, in a similar way as with the first and second outer flanges 171, 271, or the alternative first and second inner flanges shown and described in relation to Figure 7A. In some such examples, the vacuum-insulated pipe assembly 100 may comprise a further metallic gasket clamped between the first and second inner flanges 161, 261. The first and second inner flanges 161, 261 may comprise respective knife-edge protrusions that deform the further metallic gasket in a similar way as described in relation to the metallic gasket 80 and inner metallic gasket 90b.

In some examples, instead of providing the metallic gasket 80 and first and second knife-edge protrusions, the seal between the first and second outer flanges 171, 271 (or the alternative first and second outer flanges 171b, 271b) may be provided by an elastomeric seal, such as a PTFE seal. In some examples, the seal may be provided by a spring-energised seal, such as a spring-energised PTFE seal or metallic spring seal, provided between the first and second outer flanges 171, 271 (or the alternative first and second outer flanges 171b, 271b).

In some examples, the first and second elastomeric O-ring seals 291, 292 may be any other suitable type of sealing element. For instance, the vacuum-insulated pipe assembly 100 (or the first or second alternative vacuum-insulated pipe assemblies 100b, 100c) may comprise a metallic O-ring that is resilient under cryogenic conditions.

In some examples, instead of providing the first and second rigid thermal insulation

It is to be noted that the term "or" as used herein is to be interpreted to mean "and/or", unless expressly stated otherwise.

## Claims

1. A vacuum insulated pipe assembly comprising a first pipe section and a second pipe section, wherein:
the first pipe section comprises a first outer wall and a first inner wall within the first outer wall, the first outer and inner walls are concentric along a common central axis, and the first outer wall is spaced from the first inner wall to define a first space;
the second pipe section comprises a second outer wall and a second inner wall within the second outer wall, the second outer and inner walls are concentric along the common central axis, and the second outer wall is spaced from the second inner wall to define a second space;
the first inner wall comprises a first inner connector and the second inner wall comprises a second inner connector connected to the first inner connector; and
the vacuum-insulated pipe assembly comprises:
a shoulder on one of the first and second outer walls;
a sleeve portion supported on the shoulder and slidable along the shoulder in an axial direction along the common central axis selectively provide access to a region in which the first and second inner connectors are located; and
a seal element connected to the shoulder, the seal element configured to provide a seal between the shoulder and the sleeve portion.

2. The vacuum insulated pipe assembly of claim 1, wherein the shoulder comprises a slide face in sliding engagement with the sleeve, and the seal element is located on the slide face.

3. The vacuum insulated pipe assembly of claim 1, wherein the shoulder comprises a limit face in selective engagement with the sleeve to restrict a relative motion of the sleeve in the axial direction;
wherein the limit face is disengaged from the sleeve when the sleeve is moved to provide access to the region; and
wherein the seal element is located on the limit face.

4. The vacuum insulated pipe assembly of any one of claims 1 to 3, comprising a shoulder connector releasably connecting the sleeve to the shoulder to restrict a relative movement of the sleeve and the shoulder.

5. The vacuum insulated pipe assembly of any one of claims 1 to 4, wherein the first and second pipe sections are configured so that the first and second spaces are fluidically connected across the region to provide a continuous space extending across the first and second pipe sections; and wherein the continuous space is evacuated to provide a vacuum in the space.

6. The vacuum insulated pipe assembly of any one of claims 1 to 4, wherein the first and second pipe sections are configured so that the first and second spaces are fluidically isolated from each other, and wherein the first and second spaces are evacuated to provide a vacuum in each of the first and second spaces.

7. The vacuum insulated pipe assembly of claim 6, comprising rigid thermally insulative material in the region, the rigid thermally insulating material shaped to conform to and at least partly enclose the first and second inner connectors in the region.

8. The vacuum insulated pipe assembly of any one of claims 1 to 7, wherein the shoulder is located on the first outer wall, the sleeve comprises a first flange, and the second outer wall comprises a second flange,
wherein the first and second flanges are releasably connected so that the first and second outer walls and the sleeve enclose the region; and
wherein the vacuum insulated pipe assembly comprises a connector seal element between the first and second flanges.

9. The vacuum insulated pipe assembly of claim 8, wherein:
the connector seal element comprises a metallic gasket,
at least one of the first and second flanges comprises a protrusion, and
the protrusion is engaged with the metallic gasket such that the metallic gasket is plastically deformed in the region of the protrusion.

10. A hydrogen fuel system comprising the vacuum-insulated pipe assembly of any one of claims 1 to 10, the first and second inner walls forming a flow path for flow of hydrogen fuel in the hydrogen fuel system.

11. An aircraft fuel system comprising the vacuum insulated pipe assembly of any one of claims 1 to 9, or the hydrogen fuel system of claim 10.
